# EUROPEAN PATENT APPLICATION

(11) **EP 2 230 709 A1**
(43) Date of publication of application: **22.09.2010**
(21) Application number: 08856895.1
(22) Date of filing: 03.12.2008
(51) Int. Cl.: H01M 8/04, F24F 6/00, F24F 6/04, H01M 8/10

(54) **HUMIDIFIER AND FUEL CELL SYSTEM USING THE SAME**

(30) Priority: 04.12.2007 JP 2007313330
(71) Applicant: Panasonic Corporation, Kadoma-shi Osaka 571-8501 (JP)
(72) Inventor: The designation of the inventor has not yet been filed
(74) Representative: Ehlers, Jochen
(86) International application number: PCT/JP2008/003580
(87) International publication number: WO 2009/072283

(57) **Abstract**

A humidifier (16) includes a hollow fiber module (42) in which a gas to be humidifier flows, and a tubular casing (30) that houses the hollow fiber module (42). An inlet port (32) for introducing a humidifying gas into a flow path (30h) is formed on the peripheral surface on one end side of the casing (30), and an outlet port for discharging the humidifying gas from the flow path 30h is formed on the peripheral surface of the other end side of the casing 30. The casing (30) includes a curved portion (37), and the hollow fiber module (42) is curved along the shape of the curved portion (37).

## Description

### TECHNICAL FIELD

The present invention relates to a humidifier and a fuel cell system using the same.

### BACKGROUND ART

A fuel cell is a device for generating electric power and heat by an electrochemical reaction between hydrogen and oxygen. Recently, polymer electrolyte fuel cells have attracted attention, in which at least one of the reaction gasses, that is, a fuel gas containing hydrogen and an oxidant gas containing oxygen, needs to be humidified and supplied to a fuel cell stack in order to maintain the ion conductivity of the polymer electrolyte membrane. In a commonly used fuel cell system, a total heat exchange type humidifier humidifies a reaction gas by using cooling water or exhaust gas with a high water content discharged from a fuel cell stack as a heat source and a water source.

Conventionally, there has been known a humidifier employing moisture permeable hollow fibers. FIG. 8 shows a humidifier disclosed in JP 2004-6100 A. In a humidifier 100 shown in FIG. 8, moist air or water is circulated along the outer peripheral surface of a hollow fiber module 101 and a reaction gas is circulated inside the hollow fiber module 101 (inside the hollow fibers), and thereby total heat exchange is performed.

Hereinafter, in a humidifier, a gas that supplies water (e.g., moist air) is defined as a humidifying gas, and a gas that receives water (i.e., a reaction gas) is defined as a gas to be humidified.

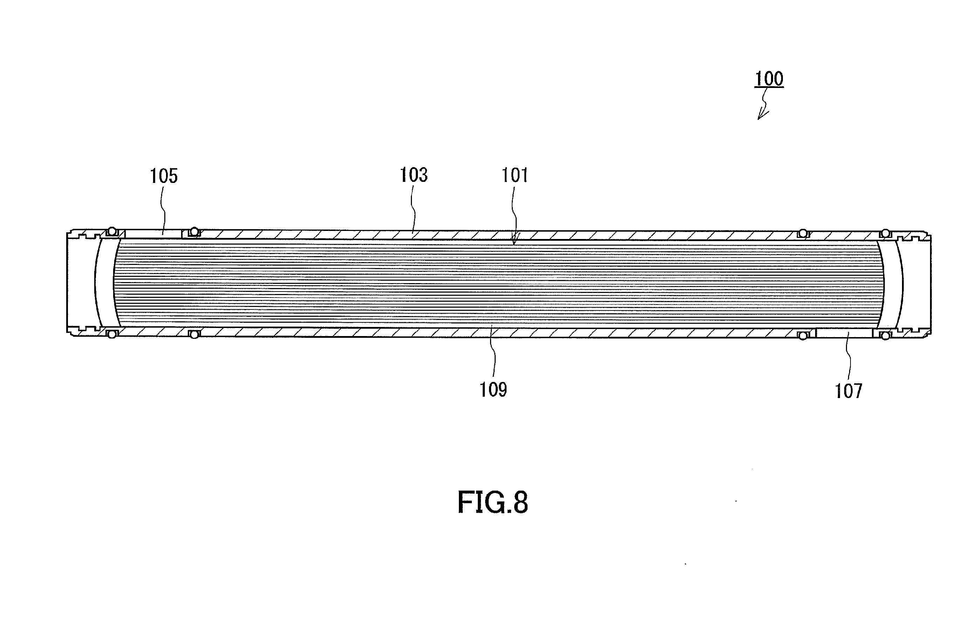

When the humidifying gas is condensable, it is cooled and condensed inside the humidifier. The condensed water is likely to cause an increase in pressure loss. Therefore, a conventional humidifier is configured to allow the humidifying gas to flow downward from the top to the bottom. Since the downward flow of the humidifying gas allows the condensed water to be discharged to the outside of the humidifier with the help of gravity, such a configuration is advantageous in preventing an increase in pressure loss. For example, in the humidifier 100 shown in FIG. 8, an inlet port 105 is formed on the upper portion of a casing 103, and an outlet port 107 is formed on the lower portion of the casing 103. The humidifying gas such as moist air is introduced into an internal space 109 of the casing 103 through the inlet port 105 and discharged therefrom through the outlet port 107.

### DISCLOSURE OF THE INVENTION

The humidifier 100 shown in FIG. 8 has an advantage in terms of pressure loss, but has room for improvement in terms of total heat exchange efficiency (i.e., water recovery efficiency). In order to enhance the total heat exchange efficiency, it is important to increase the length of the contact time between the hollow fiber module and the condensed water generated from the humidifying gas.

It is an object of the present invention to provide a humidifier capable of achieving a high total heat recovery efficiency and a fuel cell system using the humidifier.

The present invention provides a humidifier including: a hollow fiber module in which a gas to be humidified flows; and a tubular casing that houses the hollow fiber module. In this humidifier, an inlet port for introducing a humidifying gas into the casing is formed on a peripheral surface on one end side of the casing, and an outlet port for discharging the humidifying gas from the casing is formed on a peripheral surface on the other end side of the casing. The casing has a curved portion whose shape is configured such that an inner bottom of the casing facing a position at which the inlet port is formed shifts to a ceiling thereof on the way from the inlet port to the outlet port, and the hollow fiber module is curved along the shape of the curved portion.

In another aspect, the present invention provides a humidifier including: a hollow fiber module in which a gas to be humidified flows; and a tubular casing that houses the hollow fiber module. In this humidifier, an inlet port for introducing a humidifying gas into the casing is formed on a peripheral surface on one end side of the casing, and an outlet port for discharging the humidifying gas from the casing is formed on a peripheral surface on the other end side of the casing. The casing has a portion that is curved such that an angle between a tangent line and a reference plane decreases continuously or in a stepwise manner to zero and then increases again toward a downstream side with respect to a flow direction of the humidifying gas, and the hollow fiber module is curved along the shape of the curved portion. Here, the tangent line is tangent to an inner peripheral surface of the casing that appears in a longitudinal cross section thereof in an installed state in which the humidifier is installed so that the inlet port is located above the outlet port, and the reference plane is parallel to a vertical direction of the casing and perpendicular to the longitudinal cross section.

In still another aspect, the present invention provides a fuel cell system including a fuel cell configured to generate electric power using a fuel gas and an oxidant gas; and a humidifier disposed in a path for supplying at least one selected from the fuel gas and the oxidant gas to the fuel cell. In this fuel cell system, the above-mentioned humidifier is used as the humidifier.

In the humidifier of the present invention, the casing that houses the hollow fiber module has the curved portion. Therefore, the humidifier of the present invention allows a longer contact time between the condensed water and the hollow fiber module to be gained, compared with a conventional straight-shaped humidifier, which results in a higher water recovery efficiency. In other words, the gas to be humidified can be humidified with high efficiency without the help of auxiliary equipment such as a blower and a compressor to increase the power. Accordingly, the use of the humidifier of the present invention in a fuel cell system, particularly in a polymer electrolyte fuel cell (PEFC) system, which deteriorates rapidly due to drying of an electrolyte membrane, allows the fuel cell system to expand the range of operational applications as well as to enhance the reliability.

### BRIEF DESCRIPTION OF THE DRAWINGS

FIG. 1 is a block diagram showing an example of a fuel cell system of the present invention.
FIG. 2A is a longitudinal cross-sectional view of a humidifier of a first embodiment.
FIG. 2B is a view of the humidifier taken along an arrow A in FIG. 2A.
FIG. 3 is a diagram for explaining how the humidifier of the first embodiment works.
FIG. 4 is a diagram showing in detail the shape of a curved portion.
FIG. 5A is a diagram for explaining how the humidifier having a circular lateral cross section works.
FIG. 5B is a diagram for explaining how the humidifier having a flattened lateral cross section works.
FIG. 6A is a longitudinal cross-sectional view of a humidifier of a second embodiment.
FIG. 6B is a view of the humidifier taken along an arrow A in FIG. 6A.
FIG. 7 is a diagram for explaining how the humidifier of the second embodiment works.
FIG. 8 is a longitudinal cross-sectional view of a conventional humidifier.

### BEST MODE FOR CARRYING OUT THE INVENTION

Hereafter, embodiments of the present invention will be described with reference to the accompanying drawings.

### (First Embodiment)

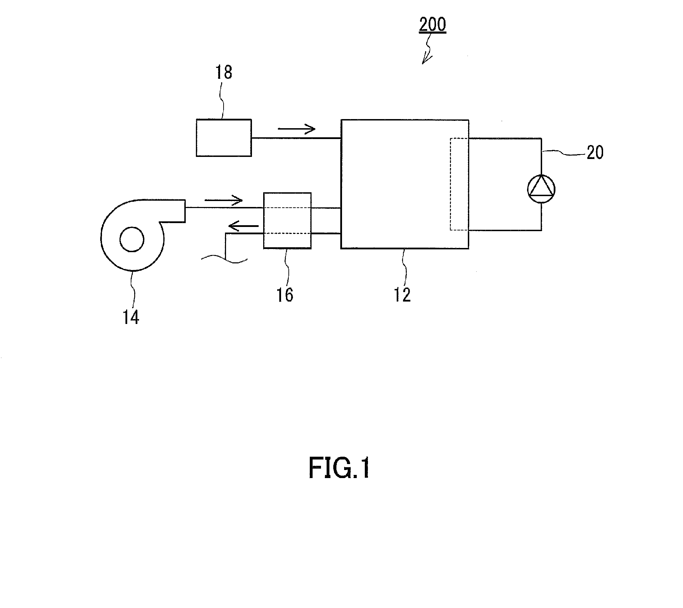

FIG. 1 is a block diagram of a fuel cell system of the present embodiment. A fuel cell system 200 includes a fuel cell 12, an air supplier 14, a humidifier 16, a reformer 18, and a cooling system 20. Since these devices that constitute the fuel cell system 200 are all known but the humidifier 16, a detailed description thereof is not given herein.

The fuel cell 12 (fuel cell stack) is supplied with a steam-reformed gas (having a hydrogen concentration of 75 to 80%) as a fuel gas from the reformer 18, and with air as an oxidant gas from the air supplier 14. The fuel cell 12 generates electric power by reacting hydrogen contained in the reformed gas and oxygen contained in the air. In order to maintain the fuel cell 12 under specified temperature conditions, a specified amount of cooling water at a specified temperature is supplied to the fuel cell 12 from the cooling system 20.

The fuel cell 12 is, for example, a polymer electrolyte fuel cell. Since a hydrated electrolyte is used in the fuel cell 12, the reformed gas and air to be supplied to the fuel cell 12 need to be humidified appropriately. In the present embodiment, the reformed gas is obtained by steam reforming. Therefore, the reformed gas is humidified according to the S/C (steam/carbon) ratio thereof in the course of the steam reforming. On the other hand, the air is humidified by the humidifier 16. The humidifier 16 may, of course, be used to humidify the fuel gas containing hydrogen. The humidifier(s) 16 is (are) placed in a path or paths for supplying one of the gases selected from the fuel gas and the oxidant gas or both of the gases to the fuel cell 12.

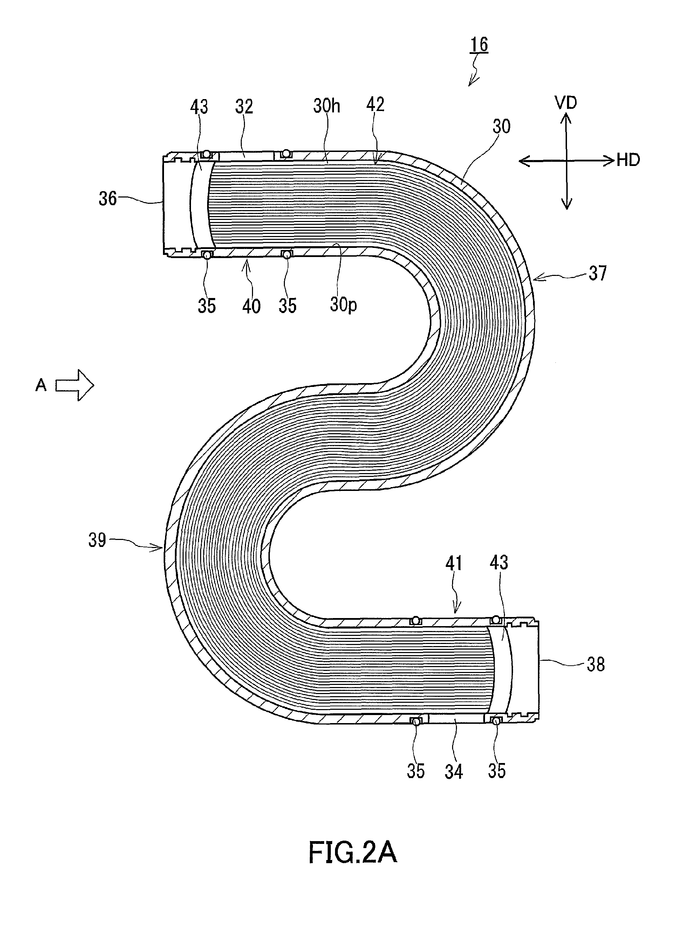

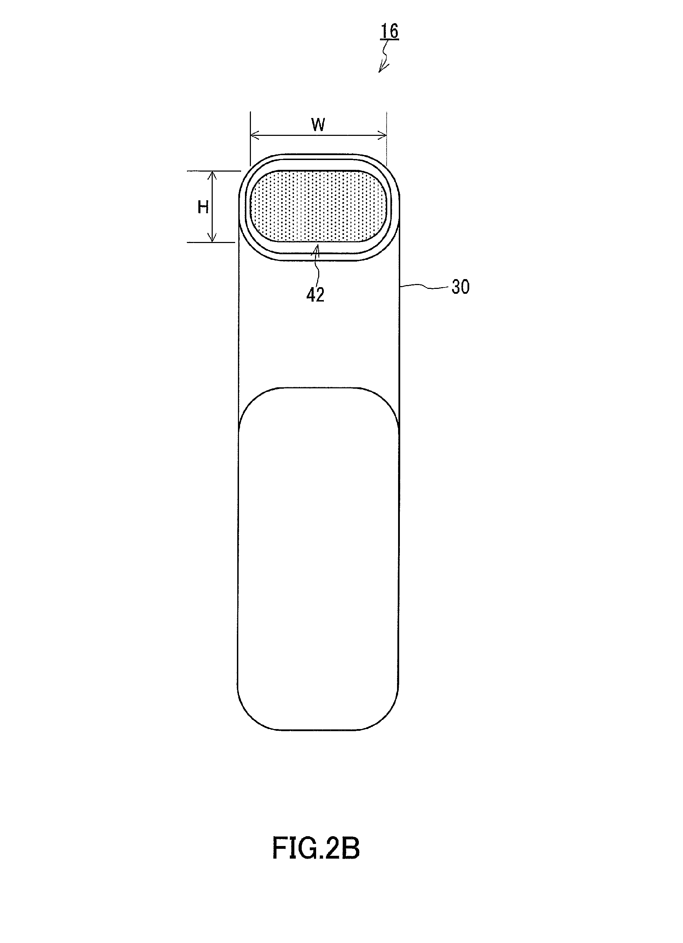

FIG. 2A is a longitudinal cross-sectional view of the humidifier 16 of the first embodiment, and FIG. 2B is a view of the humidifier 16 taken along an arrow A shown in FIG. 2A. The humidifier 16 includes a hollow fiber module 42 and a casing 30. The hollow fiber module 42 is housed in the casing 30. The internal space of the casing 30 is used as a flow path 30h of the humidifying gas for humidifying the gas to be humidified. The flow path 30h is formed along the longitudinal direction of the hollow fiber module 42. Total heat exchange is performed between the gas to be humidified flowing inside the hollow fiber module 42 (strictly speaking, inside many hollow fibers that constitute the hollow fiber module 42) and the humidifying gas flowing through the flow path 30h in the casing 30, and thereby water is supplied from the humidifying gas to the gas to be humidified.

The casing 30 is a tubular component. An inlet port 32 for introducing the humidifying gas into the flow path 30h is formed on the peripheral surface on one end side of the casing 30. An outlet port 34 for discharging the humidifying gas from the flow path 30h is formed on the peripheral surface of the other end side of the casing 30. The flow path 30h has a constant cross-sectional area and a constant cross-sectional shape in the space between the inlet port 32 and the outlet port 34. The casing 30 is curved at two locations between the inlet port 32 and the outlet port 34, and these two locations correspond to a first curved portion 37 and a second curved portion 39. The first curved portion 37 is a portion following a straight-line portion 40 located on the upstream side on which the inlet port 32 is formed. The second curved portion 39 is a portion between the first curved portion 37 and a straight-line portion 41 located on the downstream side on which the outlet port 34 is formed. In the casing 30, the hollow fiber module 42 is curved along these curved portions 37 and 39. These curved portions 37 and 39 allow the contact time between the hollow fiber module 42 and the condensed water generated from the humidifying gas to be increased.

The peripheral surface on one end side of the casing 30 is defined as a peripheral surface between the center of the casing 30 and one of the openings (opening 36) thereof. The peripheral surface on the other end side of the casing 30 is defined as a peripheral surface between the center of the casing 30 and the other opening (opening 38) thereof.

It is desirable that each of the first and second curved portions 37 and 39 of the casing 30 be curved to form a 180-degree arc. The curved portions having such a shape enhances the effect of increasing the contact time between the condensed water and the hollow fiber module 42. Further, in the present embodiment, the casing 30 includes the two curved portions 37 and 39, and has an S-shape. In other words, the casing 30 is curved so that the flow path 30h forms an S-shape. In still other words, the casing 30 has U-shaped curved portions at two locations. At least two curved portions 37 and 39 further enhance the effect of increasing the contact time between the condensed water generated from the humidifying gas and the hollow fiber module 42. The number of locations of the curved portions are not limited to two. For example, they may be provided at even-numbered locations.

The humidifier 16 of the present embodiment is designed on the assumption that it is installed and used while the straight-line portion 40 is kept in a horizontal position and the inlet port 32 is located above the outlet port 34. Therefore, in the present specification, the state in which the inlet port 32 is located above the outlet port 34 such that the maximum vertical distance can be obtained between the inlet port 32 and the outlet port 34 while the straight-line portion 40, in which the inlet port 32 is formed, is kept in the horizontal position is defined as the installed state of the humidifier 16 (the state in which the humidifier 16 is used actually).

It is desirable that the inlet port 32 be formed with its opening facing upward when the humidifier 16 is in the installed state. In other words, it is desirable that the opening of the inlet port 32 be exposed fully in the top view of the humidifier 16. When the inlet port 32 is formed in such a manner, even if the exhaust gas from the fuel cell 12 contains condensed water, the condensed water can be guided smoothly from the inlet port 32 into the flow path 30h. On the other hand, it is desirable that the outlet port 34 be formed with its opening facing downward when the humidifier 16 is in the above-mentioned installed state. In other words, it is desirable that the opening of the outlet port 34 be exposed fully in the bottom view of the humidifier 16. When the outlet port 34 is formed in such a manner, the condensed water can be discharged smoothly from the casing 30. Therefore, such a configuration is advantageous in suppressing an increase in power required for the blower.

The outlet port 34 may be formed with its opening facing upward, as to be described in the second embodiment. The inlet ports 32 may be formed at two or more locations on the peripheral surface of the casing 30, or only one inlet port 32 may be formed as in the present embodiment. The same applies to the outlet port 34. If the number of inlet ports 32 and that of outlet ports 34 are each limited to one, the inlet port 32 and the outlet port 34 respectively can be piped easily and also can be designed easily.

A pipe for supplying the gas to be humidified to the hollow fiber module 42 is connected to one opening 36 of the casing 30 via a head, i.e., an air supply and exhaust block (not shown). A pipe for supplying the humidified gas to the fuel cell 12 is connected to the other opening 38 of the casing 30. Thereby, an exchange system, in which the flow direction of the humidifying gas and the flow direction of the gas to be humidified are opposite to each other, is formed in the humidifier 16. An O-ring 35 is used to seal the joint between the humidifier 16 and the head, i.e., the air supply and exhaust block (not shown).

It is desirable that the casing 30 be made of a material such as a metal or a resin. Resins can be molded easily into various shapes by a molding method such as injection molding. Therefore, such resins are suitable as materials for the casing 30 because the curved portions 37 and 39 can be formed easily therein. The humidifier 16 may be assembled in the following manner. Two gutter-shaped components are prepared as components to constitute the casing 30. The hollow fiber module 42 is inserted into one of the gutter-shaped components, which then is covered with the other component to form a single unit. A method of joining these two gutter-shaped components into a single unit is not particularly limited. For example, they can be joined by a method such as ultrasonic welding or heat welding, or using an adhesive. With these methods, the casing 30 that houses the hollow fiber module 42 can be formed easily.

Next, the hollow fiber module 42 will be described. The hollow fiber module 42 is composed of one or more bundles of many hollow fibers. Both end portions 43, 43 of the hollow fiber module 42 are bonded with a material such as a resin to prevent the hollow fibers from being loosened. The hollow fiber module 42 is kept in the same shape as that of the flow path 30h inside the casing 30. The gaps between the casing 30 and the end portions 43, 43 of the hollow fiber module 42 are sealed with a sealing material to prevent the humidifying gas from leaking.

Any types of hollow fibers may be used as long as they have moisture permeability. Commonly available hollow fibers fabricated from porous resin materials may be used. For example, when a polysulfone hollow fiber membrane obtained by spinning is subjected to heat treatment, a solvent is removed from the membrane, and a porous polysulfone hollow fiber membrane having moisture permeability is obtained. In the case where a hollow fiber module is produced using hollow fibers that are highly flexibly immediately after the spinning but can be cured by heat treatment into a stable solid form, the following operation may be performed. First, hollow fibers are pre-dried immediately after the spinning (for example, at 50°C for 1 hour). After the pre-drying, the hollow fibers, which are still flexible, are bundled together to obtain a hollow fiber module. The hollow fiber module further is fitted into a mold (for example, an S-shaped mold), and is subjected to heat treatment (for example, at 160°C for 30 minutes) together with the mold. Thus, the hollow fiber module 42, which is cured in an S-shape, is obtained.

In the case where the hollow fiber module 42 is produced using hollow fibers that maintain the flexibility even after obtaining moisture permeability, for example, hollow fibers made of a material such as a perfluorosulfonic resin (trade name: Nafion, manufactured by Du Pont), the module does not need to be molded before it is inserted into the casing 30. In addition, porous hollow fibers made of a fluororesin typified by polytetrafluoroethylene also may be used.

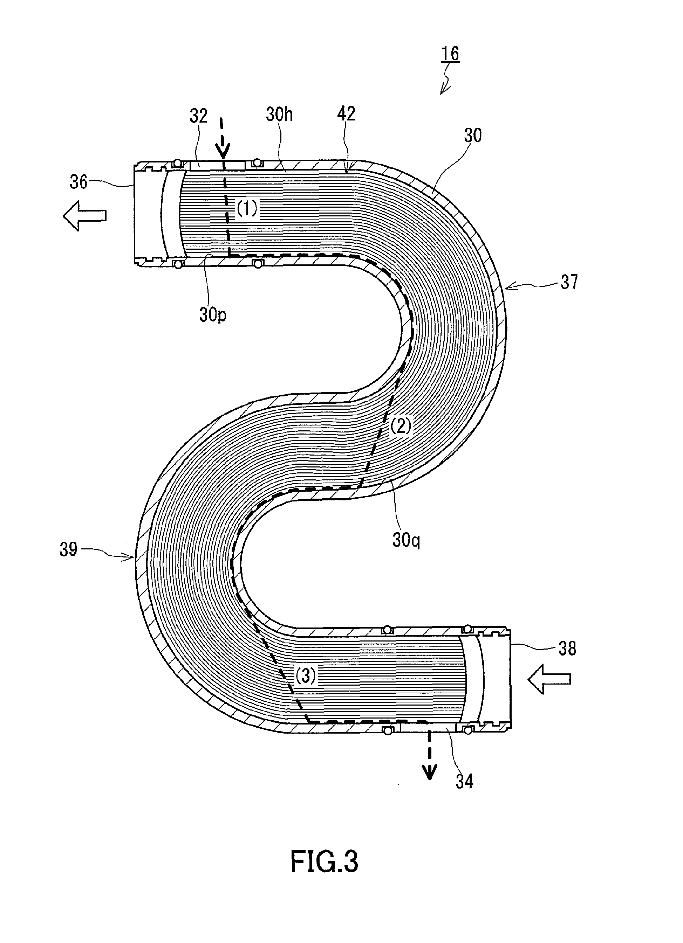

Next, how the humidifier 16 works will be explained with reference to FIG. 3. The gas to be humidified such as air is introduced into the hollow fiber module 42 through the lower opening 38 of the casing 30, as shown by a hollow arrow. The gas to be humidified flows upward from the bottom to the top through the hollow fiber module 42, and then it is discharged to the outside of the humidifier 16 through the upper opening 36 of the casing 30 and delivered to the fuel cell 12. On the other hand, the humidifying gas is guided into the flow path 30h in the casing 30 through the inlet port 32, and flows toward the outlet port 34 on the downstream side. Total heat exchange is performed between the gas to be humidified flowing inside the hollow fiber module 42 and the humidifying gas flowing through the flow path 30h. Thus water is supplied from the humidifying gas to the gas to be humidified.

The humidifying gas is saturated with water vapor or is in a nearly saturated state. Furthermore, the exhaust gas from the fuel cell 12 sometimes contains condensed water before it is introduced into the humidifier 16, as described later. The condensed water introduced into the flow path 30h through the inlet port 32 reaches, under its own weight, the inner peripheral surface 30p, which is opposite to the side on which the inlet port 32 is formed (as shown by a broken line (1)). In this case, the condensed water penetrates down the hollow fiber module 42, so that it also comes in contact with the hollow fibers located in the center portion of the hollow fiber module 42 as well as the hollow fibers located opposite to the side adjacent to the inlet port 32.

The condensed water further flows along the inner peripheral surface 30p of the casing 30. When the condensed water reaches the first curved portion 37, it heads away from the inner peripheral surface 30p of the casing 30 under its own weight, and penetrates down through the hollow fiber module 42 to reach the inner peripheral surface 30q on the opposite side (as shown by a broken line (2)). When the condensed water reaches the second curved portion 39, it flows in the same way (as shown by a broken line (3)), and is discharged to the outside of the casing 30 through the outlet port 34. As described above, the curved portions 37 and 39 prevent the condensed water from flowing along the inner wall, resulting in an increase in the number of contacts (i.e., an increase in the contact time) between the condensed water and the hollow fiber module 42.

In the conventional straight-shaped humidifier (in FIG. 8), there are only a limited number of contacts between the condensed water and the hollow fiber module, and therefore it is difficult to utilize the condensed water effectively. In contrast, according to the humidifier 16 of the present embodiment, the condensed water flows to penetrate the hollow fiber module 42 repeatedly in the longitudinal direction thereof. Therefore, water also can be recovered from the condensed water effectively.

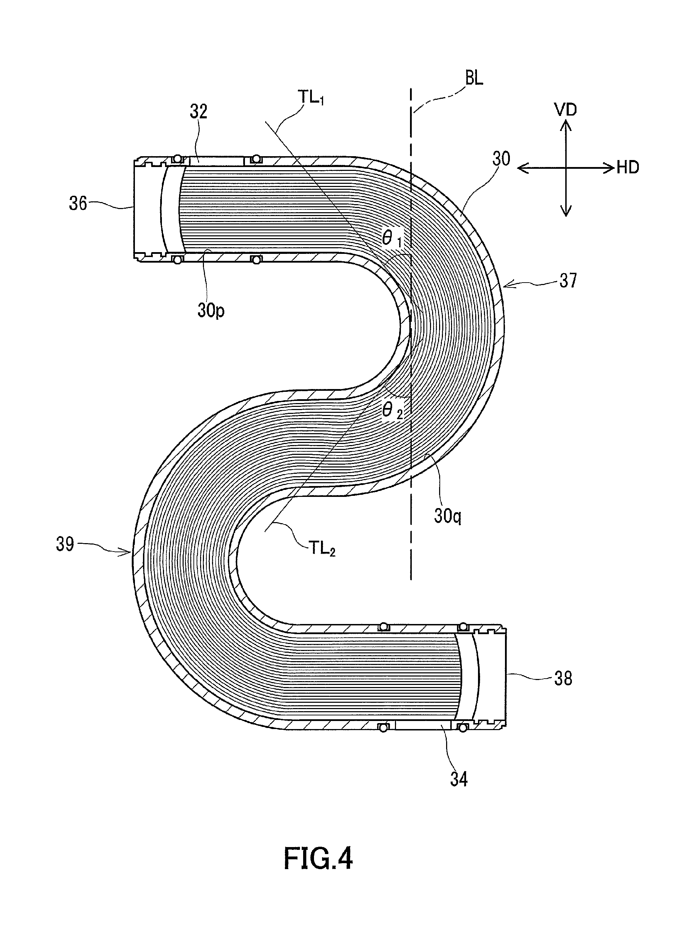

When the following conditions are satisfied, the flow of the condensed water is formed as shown by the broken lines in FIG. 3. First, as shown in FIG. 4, the orientation of the humidifier 16 is determined to be the above-mentioned installed state. It is desirable that the shape of the curved portions 37 and 39 be configured such that an angle θ between a tangent line TL and a reference plane BL decreases continuously or in a stepwise manner to zero and then increases again toward the downstream side with respect to the flow direction of the humidifying gas. Here, the tangent line TL (tangent lines TL₁ and TL₂ in the case of FIG. 4) is a line tangent to the inner peripheral surface 30p of the casing 30 that appears in the longitudinal cross section thereof (i.e., the longitudinal cross section of the humidifier 16) in this installed state, and the reference plane BL is a plane parallel to the vertical direction of the casing 30 and perpendicular to the longitudinal cross section thereof.

As used herein, the phrase "the angle θ decreases in a stepwise manner" means that the shape of the curved portions 37 and 39 may be configured such that the inner peripheral surfaces 30p and 30q of the curved portions 37 and 39 each form a straight line in the longitudinal cross section as long as the angular bending of the hollow fibers that constitute the hollow fiber module 42 does not become apparent. In the case where the inner peripheral surfaces 30p and 30q of the curved portions 37 and 39 each form a straight line in the longitudinal cross section, the tangent line cannot be defined in a precise sense. Therefore, the straight line itself is treated as the tangent line TL shown in FIG. 4.

In the case where the casing 30 has a two-dimensional curved portion, the above "longitudinal cross section" means a cross section that separates the casing 30 into two right and left gutter-shaped components along the flow direction of the humidifying gas. In the case where the casing 30 has a three-dimensional curved portion, the above "longitudinal cross section" means a horizontal projection view of a curved cross-sectional surface that separates the casing 30 into two right and left gutter-shaped components along the flow direction of the humidifying gas. The above-mentioned tangent line can be defined in each of these "longitudinal cross sections".

From another point of view, the first curved portion 37 may have a shape that satisfies the following conditions. That is, it is desirable that the shape of the curved portion 37 be configured such that, in the above-mentioned installed state, the inner bottom (inner peripheral surface 30p) of the casing 30 facing the position at which the inlet port is formed shifts to the ceiling thereof on the way from the inlet port 32 to the outlet port 34. The inner bottom (inner peripheral surface 30p) of the casing 30 facing the position at which the inlet port 32 is formed shifts to the ceiling thereof on the way from the inlet port 32 to the outlet port 34, and the ceiling further shifts to the bottom again. Thus, the second curved portion 39 is formed. The portions that shift from the bottom to the ceiling, that is, the curved portions 37 and 39, prevent the condensed water from flowing along the inner wall, and guide the condensed water to flow, on its own, along the path as shown in FIG. 3.

As seen from the view of the humidifier 16 of the present embodiment taken along the arrow A in FIG. 2B, the humidifier 16 of the present embodiment has a flattened lateral cross section. When the cross section of the hollow fiber module 42 perpendicular to the longitudinal direction thereof is defined as a lateral cross section, the hollow fiber module has, at a position of the casing including the inlet port 32, a flattened lateral cross section with its horizontal length W being greater than its vertical length H, where the horizontal direction and the vertical direction are determined by the installed state of the humidifier 16.

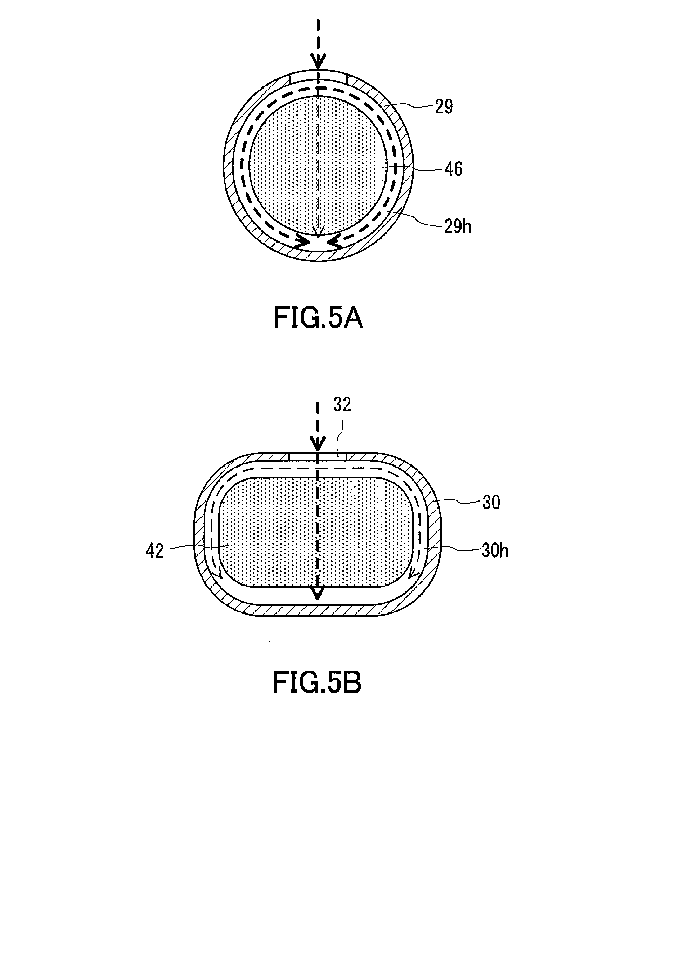

For example, when the casing 29 and the hollow fiber module 46 are cylindrical in shape, as shown in FIG. 5A, most of the condensed water flows along the outer peripheral surface of the hollow fiber module 46 and the inner peripheral surface of the casing 29, and only a small amount of (a fraction of) the condensed water penetrates down through the hollow fiber module 46. In contrast, according to the present embodiment, an increased amount of the condensed water penetrates down through the hollow fiber module 42, which increases the efficiency of recovering water from the condensed water.

### (Second Embodiment)

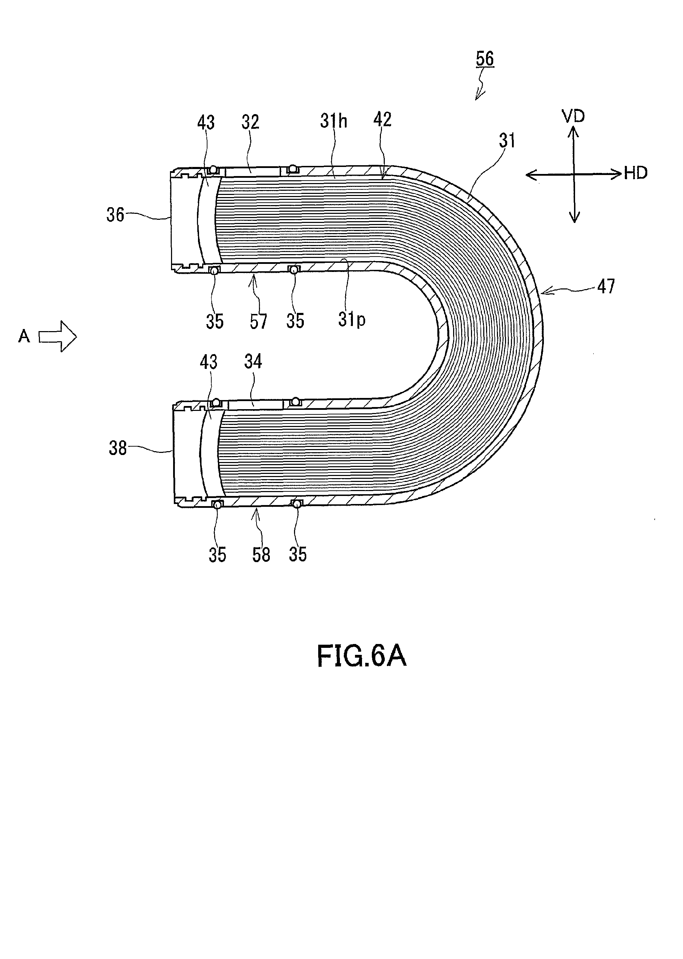

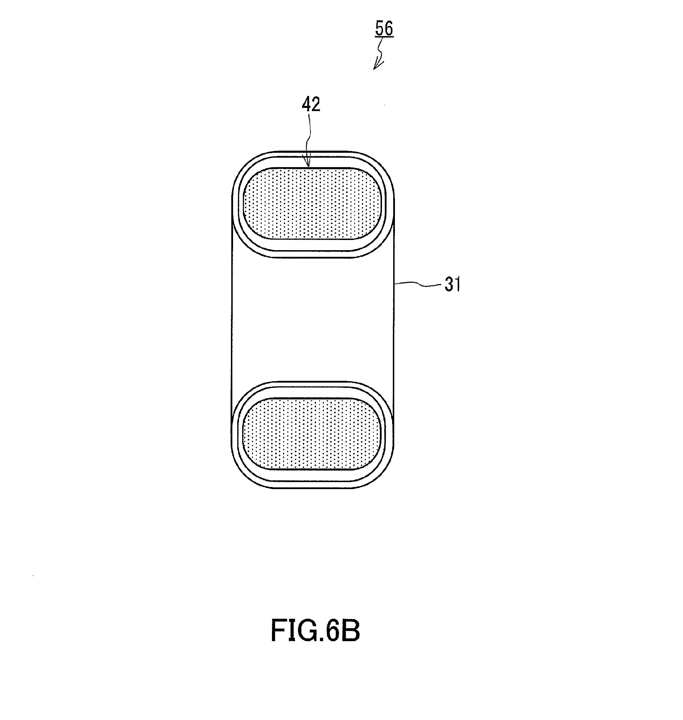

FIG. 6A is a longitudinal cross-sectional view of a humidifier 56 of the second embodiment, and FIG. 6B is a view of the humidifier 56 taken along an arrow A shown in FIG. 6A. The present embodiment is different from the first embodiment in the use of a casing having an odd number of curved portions.

As shown in FIG. 6A and FIG. 6B, the casing 31 has a curved portion 47 at one location, and has a U-shape. The upstream side and the downstream side of the curved portion 47 have straight-line portions 57 and 58, respectively. The inlet port 32 is formed in the straight-line portion 57 on the upstream side, and the outlet port 34 is formed in the straight-line portion 58 on the downstream side. In the humidifier of the present embodiment, the curved portion 47 is formed at only one location, which is more advantageous in terms of miniaturization thereof than the humidifier 16 of the first embodiment.

The inlet port 32 of the present embodiment is formed at the same position as that of the first embodiment, but the outlet port 34 of the present embodiment is formed at a position different from that of the first embodiment. Specifically, the outlet port 34 is formed with its opening facing upward when the humidifier 56 is in the installed state. The outlet port 34 is located above the hollow fiber module 42 housed in the straight-line portion 58.

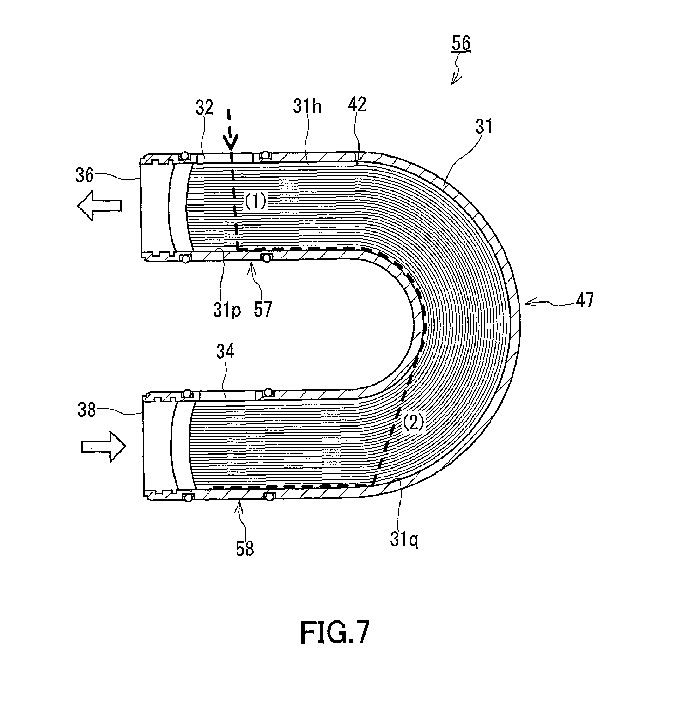

As shown in FIG. 7, the condensed water introduced into a flow path 31h through the inlet port 32 reaches, under its own weight, an inner peripheral surface 31p, which is opposite to the side on which the inlet port 32 is formed (as shown by a broken line (1)). In this case, the condensed water penetrates down the hollow fiber module 42, so that it also comes in contact with the hollow fibers located in the center portion of the hollow fiber module 42. The condensed water further flows along the inner peripheral surface 31p of the casing 31. When the condensed water reaches the curved portion 47, it heads away from the inner peripheral surface 31p of the casing 31 under its own weight, and penetrates down through the hollow fiber module 42 to reach the inner peripheral surface 31q on the opposite side (as shown by a broken line (2)). Since the outlet port 34 is formed with its opening facing upward, the condensed water is stored or retained easily in the bottom (in the flow path 31h of the straight-line portion 58) of the casing 31. When the condensed water is stored or retained, the hollow fiber module 42 is immersed in the condensed water, which increases the humidification efficiency.

### (Exhaust gas from fuel cell)

Next, the exhaust gas from the fuel cell will be described. Table 1 shows the typical specifications and operational conditions of a 1 kW class fuel cell system for stationary cogeneration applications. A polymer electrolyte fuel cell is used in this system.

**[Table 1]**

| Specifications | Unit | |
|---|---|---|
| Electrode area | cm² | 112 |
| Current density | A/cm² | 0.25 |
| Number of cells | - | 60 |
| Cell voltage | V | 0.74 |
| Electric power generated (KW/h) | kW | 1.2 |
| Heat generated (KW/h) | kW | 1.2 |
| Amount of cooling water | slpm | 1.6 |
| Temperature of incoming cooling water | °C | 60 |
| Temperature of outgoing cooling water | °C | 71 |
| Amount of hydrogen consumed | slpm | 11.5 |
| Amount of oxygen consumed | slpm | 5.7 |
| Fuel utilization rate | - | 0.75 |
| Oxygen utilization rate | - | 0.50 |
| Amount of hydrogen required | slpm | 15.3 |
| Amount of air required | slpm | 54.6 |

In this fuel cell system, 11.5 liters of hydrogen and 5.7 liters of oxygen are consumed per minute (i.e. 11.5 slpm (standard liter per minute) of hydrogen and 5.7 slpm of oxygen are consumed) to obtain a power output of 1.2 kW. In view of the appropriate rates of fuel utilization (75%) and oxygen utilization (50%), the amount of hydrogen and the amount of air actually to be supplied to the stack are 15.3 liters and 54.6 liters per minute, respectively. Cooling water is supplied to the stack at 60°C and a flow rate of 1.6 liters per minute to remove the heat generated. The cooling water supplied to the stack is heated by approximately 11°C up to 71°C inside the stack, and then the hot water thus obtained is discharged from the stack.

As described above, hydrogen does not need to be humidified, while air is humidified using the exhaust gas from the stack. Table 2 below shows the thermal conditions of the exhaust gas from the stack. Half the amount of oxygen contained in 54.6 liters of air supplied per minute to the stack is consumed (i.e., the oxygen utilization rate is 50%). Accordingly, 49 liters of gas are discharged per minute from the stack in terms of dry gas. The temperature of the exhaust gas is 70.5°C, and if it is assumed that this exhaust gas is saturated with water vapor, the amount of water discharged from the stack is 18.1 g per minute.

**[Table 2]**

| Item | Unit | |
|---|---|---|
| Amount of exhaust gas | slpm | 49 |
| Temperature of exhaust gas | °C | 70.5 |
| Vapor pressure | Pa | 31896 |
| Calculated amount of water | g/min | 18.1 |
| Measured amount of water | g/min | 21.6 |
| Vapor pressure | Pa | 35800 |
| Dew point in terms of exhaust gas | °C | 73.2 |

The amount of water recovered by ice-cooling and condensing the exhaust gas from a real fuel cell system that satisfies the conditions shown in Tables 1 and 2 was 21.6 g per minute, which is greater by 3.5 g than the above amount of water calculated. That is, water in amount equivalent to this 3.5 g difference was discharged not as water vapor but as hot water from the stack. If it is assumed that the water in amount equivalent to 3.5 g is discharged as water vapor, the vapor pressure is 35800 Pa, at which the dew point is 73.2°C. This value was defined as a calculated dew point, and used as one of the device control parameters when a two-phase flow was prepared in the experiments below.

### EXAMPLES

First, a hollow fiber module was produced using 500 polysulfone hollow fibers with an outer diameter of 1.0 mm and a length of 300 mm ((prototype) manufactured by NOK Corporation). The humidifier (Example) shown in FIG. 2A and the conventional humidifier (Comparative Example) shown in FIG. 8 were produced using this hollow fiber module.

Next, test equipment was fabricated to simulate the condition in which the humidifying gas and gas to be humidified are used as shown in Tables 1 and 2, and the humidifiers were evaluated using this test equipment. Specifically, a humidifying gas was humidified by a bubbler at a flow rate of 49.1 liters per minute in terms of dry gas so as to have a dew point of 73°C, which is the calculated dew point, and then cooled to 70.5°C and supplied to the humidifier. On the other hand, dry air as a gas to be humidified was supplied to the humidifier at a flow rate of 54.6 liters per minute. The dew point of the gas to be humidified was measured at the outlet of the humidifier, and thereby the performance of the humidifier was evaluated. The dew point was measured using a mirror dew point meter. Table 3 shows the results.

**[Table 3]**

| Item | Unit | Comparative Example | Example |
|---|---|---|---|
| Amount of humidifying gas | slpm | 49.1 | 49.1 |
| Dew point | °C | 70.5 | 70.5 |
| Calculated dew point | °C | 73.0 | 73.0 |
| Amount of gas to be humidified | slpm | 54.6 | 54.6 |
| Dew point of gas to be humidified | °C | 62.5 | 63.8 |
| Efficiency | % | 68.8 | 74.1 |

The dew point of the gas to be humidified in the humidifier of Example was higher than that in the humidifier of Comparative Example. This increase in dew point corresponds to an improvement of about 7% in terms of efficiency. In general, when water vapor is used as a humidifying gas, the limit of the total heat exchange efficiency is about 70%. In Comparative Example, an efficiency (68.7%) close to this limit was obtained. In contrast, a higher efficiency (74.1%) was obtained in Example. According to the humidifier of Example, water also was recovered from the water source other than the supplied water vapor, that is, from the condensed water contained in the two-phase flow.

## Claims

1. A humidifier comprising:
a hollow fiber module in which a gas to be humidified flows; and
a tubular casing that houses the hollow fiber module,
wherein an inlet port for introducing a humidifying gas into the casing is formed on a peripheral surface on one end side of the casing, and an outlet port for discharging the humidifying gas from the casing is formed on a peripheral surface on the other end side of the casing, and
the casing has a curved portion whose shape is configured such that an inner bottom of the casing facing a position at which the inlet port is formed shifts to a ceiling thereof on the way from the inlet port to the outlet port, and the hollow fiber module is curved along the shape of the curved portion.

2. The humidifier according to claim 1, wherein the casing is curved such that the curved portion forms a 180-degree arc.

3. The humidifier according to claim 1, wherein the inlet port is formed with its opening facing upward in an installed state in which the humidifier is installed so that the inlet port is located above the outlet port.

4. The humidifier according to claim 1, wherein the outlet port is formed with its opening facing downward in an installed state in which the humidifier is installed so that the inlet port is located above the outlet port.

5. The humidifier according to claim 1, wherein the outlet port is formed with its opening facing upward in an installed state in which the humidifier is installed so that the inlet port is located above the outlet port.

6. The humidifier according to claim 1, wherein when a cross section of the hollow fiber module perpendicular to a longitudinal direction thereof is defined as a lateral cross section, the hollow fiber module has, at a position of the casing including the inlet port, a flattened lateral cross section with its horizontal length being greater than its vertical length in an installed state in which the humidifier is installed so that the inlet port is located above the outlet port.

7. The humidifier according to claim 1, wherein the casing has the curved portions at two locations, and has an S-shape.

8. The humidifier according to claim 1, wherein the casing has the curved portion at one location, and has a U-shape.

9. A fuel cell system comprising:
a fuel cell configured to generate electric power using a fuel gas and an oxidant gas; and
a humidifier disposed in a path for supplying at least one selected from the fuel gas and the oxidant gas to the fuel cell,
wherein the humidifier according to claim 1 is used as the humidifier.

10. A humidifier comprising:
a hollow fiber module in which a gas to be humidified flows; and
a tubular casing that houses the hollow fiber module,
wherein an inlet port for introducing a humidifying gas into the casing is formed on a peripheral surface on one end side of the casing, and an outlet port for discharging the humidifying gas from the casing is formed on a peripheral surface on the other end side of the casing,
the casing has a portion that is curved such that an angle between a tangent line and a reference plane decreases continuously or in a stepwise manner to zero and then increases again toward a downstream side with respect to a flow direction of the humidifying gas, and the hollow fiber module is curved along the shape of the curved portion, the tangent line being tangent to an inner peripheral surface of the casing that appears in a longitudinal cross section thereof in an installed state in which the humidifier is installed so that the inlet port is located above the outlet port, and the reference plane being parallel to a vertical direction of the casing and perpendicular to the longitudinal cross section.

11. The humidifier according to claim 10, wherein the casing is curved such that the curved portion forms a 180-degree arc.

12. The humidifier according to claim 10, wherein the inlet port is formed with its opening facing upward in the installed state.

13. The humidifier according to claim 10, wherein the outlet port is formed with its opening facing downward in the installed state.

14. The humidifier according to claim 10, wherein the outlet port is formed with its opening facing upward in the installed state.

15. The humidifier according to claim 10, wherein when a cross section of the hollow fiber module perpendicular to a longitudinal direction thereof is defined as a lateral cross section, the hollow fiber module has, at a position of the casing including the inlet port, a flattened lateral cross section with its horizontal length being greater than its vertical length in the installed state.

16. The humidifier according to claim 10, wherein the casing has the curved portions at two locations, and has an S-shape.

17. The humidifier according to claim 10, wherein the casing has the curved portion at one location, and has a U-shape.

18. A fuel cell system comprising:
a fuel cell configured to generate electric power using a fuel gas and an oxidant gas; and
a humidifier disposed in a path for supplying at least one selected from the fuel gas and the oxidant gas to the fuel cell,
wherein the humidifier according to claim 10 is used as the humidifier.
